# EUROPÄISCHE PATENTANMELDUNG

(11) **EP 2 551 733 A1**
(43) Veröffentlichungstag der Anmeldung: **30.01.2013**
(21) Anmeldenummer: 11175962.7
(22) Anmeldetag: 29.07.2011
(51) Int. Cl.: G05B 19/042, G05B 19/05

(54) **Verfahren zur Verriegelung eines Steuerungsausgangs eines Aktuators in einem Automatisierungsprogramm**

(71) Anmelder: Siemens Aktiengesellschaft, 80333 München (DE)
(72) Erfinder: Hellmann, Peter, 90459 Nürnberg (DE)

(57) **Zusammenfassung**

Die Erfindung betrifft ein Verfahren für ein Automatisierungsprogramm einer industriellen Automatisierungsanordnung (S, D, SPS) zur Verriegelung eines Steuerungsausgangs (OUT1) eines Aktuators, wobei zumindest ein Zustand (LS01, DS01, DP01) zur Freigabe des Steuerungsausgangs (OUT1) erfüllt sein muss. Dabei wird der Steuerungsausgang (OUT1) durch ein Objekt (AV01) des Automatisierungsprogramms repräsentiert welches die Adresse des Steuerungsausgangs kapselt, wobei in diesem Objekt (AV01) der zumindest eine Zustand (LS01, DS01, DP01) mit dem Zustand des Objektes (AV01) logisch derart verknüpft ist, dass der konfigurierte Steuerungsausgang (OUT1) nur einen solchen Wert annehmen kann, der für den Zustand des Steuerungsausgangs (OUT1) gemäß dem zumindest einen Zustand (LS01, DS01, DP01) erlaubt ist. Durch ein solches Verfahren sind Verriegelungsbedingungen stets mit dem Objekt gekapselt, so dass auf die bei der Verriegelung berücksichtigten Zustände einfach zugegriffen werden kann. Der Vorteil ergibt sich beim Bedienpersonal, welches die an der Verriegelung beteiligten Signale mit Zustand und Namen anzeigen kann so dass in dem Falle einer verhinderten Freigabe die Ursache sofort identifizierbar ist.

## Beschreibung

Die Erfindung betrifft ein Verfahren für ein Automatisierungsprogramm einer industriellen Automatisierungsanordnung zur Verriegelung eines Steuerungsausgangs eines Aktuators gemäß dem Oberbegriff des Patentanspruchs 1.

Industrielle Automatisierungsanordnungen bestehen in der Regel aus einer Steuerungseinheit SPS (Speicherprogrammierbare Steuerung), in der ein Automatisierungsprogramm abläuft, mit dem Sensorwerte und Sensorsignale einer zu steuernden Automatisierungsaufgabe oder eines zu steuernden Prozesses verarbeitet werden, und wobei aufgrund der verarbeiteten Sensorwerte/Sensorsignale und anderer Bedingungen Ausgangssignale für Steuerungsausgänge erzeugt werden, wobei diese Steuerungsausgänge wiederum mit Aktuatoren verbunden sind, die die zu steuernde Automatisierungsaufgabe oder den zu steuernden Prozess beeinflussen.

In der Figur ist exemplarisch eine einfache Automatisierungsanordnung schematisch dargestellt, wobei aus einem Vorratsbehälter S (Source) ein Reaktorgefäß D (Destination) befüllt wird. Die Befüllung wird mittels eines Ventils AV01 (Automatic Valve) in eine Verbindungsleitung zwischen dem Vorratsbehälter S und dem Reaktorgefäß D gesteuert. Das Ventil AV01 ist dazu an einem Steuerungsausgang OUT1 der Automatisierungseinrichtung SPS angeschlossen.

Das Automatisierungsprogramm steuert also über den Steuerungsausgang OUT1 das Ventil, wobei aus Sicherheitsgründen verschiedene Randbedingungen erfüllt sein müssen, damit eine Befüllung des Reaktorgefäßes D nicht zu einem ungewollten oder gar gefährlichen Zustand führt. Dazu soll exemplarisch eine erste Bedingung darin bestehen, dass ein Trockenschutz-Sensor DP01 (Dry Protection) im Vorratsbehälter S oder in der Rohrleitung zwischen Vorratsgefäß und Befüllgefäß anzeigt, ob Medium vorhanden ist, damit beispielsweise eine Pumpe nicht trockenläuft. Eine weitere Bedingung besteht darin, dass das Reaktorgefäß D nicht überfüllt ist, dass also ein Füllstandssensor LS01 (Level Switch) ein entsprechendes freies Volumen in dem Reaktorgefäß D anzeigt. Eine weitere Bedingung ist die, dass eine Wartungsöffnung H ("Mannloch") geschlossen ist, wobei dies durch einen Sensor DS01 (Door Switch) überwacht wird.

Diese Bedingungen können dadurch überwacht werden, dass die entsprechenden Sensor-Signale (DP01, LS01, DS01) durch eine Überwachungslogik (Hardware) überwacht und zu einem logischen Gesamtsignal OUT1 über ein logisches "UND" verknüpft werden. Üblicher Weise werden jedoch solche logischen Überwachungen und die damit verbundenen Verknüpfungen mittels des Automatisierungsprogramms hergestellt. Dazu sind beispielsweise in dem Automatisierungsprogramm die Ein- und Ausgänge wie folgt definiert:
Einlassventil: AV01 (Aktuator)
Vollmelder: LS01 (Digitalsensor)
Mannloch: DS01 (Digitalsensor)
Trockenschutz: DP01 (Digitalsensor)

In einem Pseudo-Code des Automatisierungsprogramms könnte die entsprechende Verknüpfung wie folgt aussehen:
AV01.Release:=LS01.Uncovered AND DS01.Closed AND DP01.Wet

Nur wenn das Signal AV01.Release also "TRUE" ist, wird der Ausgang OUT1 des Aktuators ebenso "TRUE", wenn dieser angesteuert wird, unabhängig davon, ob im Handbetrieb oder Automatikbetrieb (Bei Automatik etwa über eine Schrittkette).

Mit einer solchen Lösung kann die entsprechende Verriegelung des Steuerungsausgangs OUT1 zuverlässig bewerkstelligt werden. Nachteilig ist jedoch, dass im laufenden Betrieb der Automatisierungsanordnung in den Fällen, in denen die Befüllung des Rektorgefäßes D aufgrund einer eingetretenen Verriegelung nicht erfolgt, für das Bedienpersonal nicht sichtbar ist, welcher zu überwachende Zustand das Öffnen des Ventils AV01 verhindert. Ein Bediener muss dazu eine Dokumentation zu Rate ziehen, in der explizit die Bedingungen niedergelegt sind, die für die Freigabe des Ventils AV01 relevant sind. Für den Fall, dass eine solche Dokumentation nicht verfügbar ist bzw. diese nicht dem aktuellen Stand des Automatisierungsprogramms entspricht, bleibt einem Bediener als Alternative nur die Untersuchung und Online-Beobachtung des Source-Codes, der dem Automatisierungsprogramm zugrunde liegt. Sofern dieser überhaupt vorliegt, muss darin jede Stelle des Automatisierungsprogramms aufgefunden werden, die eine logische Verknüpfung zwischen dem Steuerungsausgang OUT1, also der im obigen Beispiel definierten Programm-Variablen AV01, und den Eingangssignalen IN1, IN2, IN3, die in dem obigen Ausführungsbeispiel in den Variablen LS01, DS01, DP01 abgebildet sind, verknüpft sind. Wenn das Signal AV01.Release also "FALSE" ist, weiß der Operator nicht, welches der beteiligten Signale die Freigabe verhindert.

Während eine solchen Untersuchung in einem überschaubaren Ausführungsbeispiel oder bei entsprechender Kenntnis der Automatisierungsanordnung problemlos möglich erscheint, ist das bei Anordnungen, bei denen sehr viele Signale an der Freigabe eines Aktuators beteiligt sind, oft nicht oder nur sehr aufwendig zu leisten.

Es ist somit eine Aufgabe der vorliegenden Erfindung, die Verriegelung eines Steuerungsausgangs derart in einem Automatisierungsprogramm abzubilden, dass die für einen Verriegelungszustand relevanten Zustände des gesteuerten Prozesses bzw. der gesteuerten Automatisierungsaufgabe von dem Operator in einer Schaltwarte am SCADA-System (SCADA = Supervisory Control and Data Aquisition) oder "Panel" einfach zugegriffen und nachvollzogen werden können.

Es ist dabei eine Kernidee der erfindungsgemäßen Lösung der Aufgabe, dass ein Freigabesignal für einen Aktuator nicht mit regulären Anweisungen bzw. Signalverknüpfungen im Anweisungsteil eines Automatisierungsprogramm realisiert wird, sondern durch die entsprechende Konfiguration eines Objektes, welches den entsprechenden Steuerungsausgang repräsentiert. Anstatt die beteiligten Signale direkt zu verknüpfen und nur das resultierende Signal an den Aktuator zu rangieren, werden die beteiligten Signale deskriptiv gebildet.

Die Lösung der Aufgabe sieht insbesondere ein Verfahren gemäß dem Patentanspruch 1 vor. Dabei wird ein Verfahren für ein Automatisierungsprogramm einer industriellen Automatisierungsanordnung zur Verriegelung eines Steuerungsausgangs eines Aktuators vorgeschlagen, wobei zumindest ein Zustand zur Freigabe des Steuerungsausgangs erfüllt sein muss. Dabei wird der Steuerungsausgang durch ein Objekt des Automatisierungsprogramms repräsentiert, wobei in diesem Objekt der zumindest eine Zustand mit dem Zustand (Wert) des Objekts logisch derart verknüpft ist, dass der Steuerungsausgang nur einen solchen Wert annehmen kann, der gemäß dem zumindest einen Zustand erlaubt ist. Zur Überwachung oder Evaluierung, welcher der dabei ausgewerteten Zustände eine Verriegelung des Objekts und damit eine Verriegelung des Steuerungsausgangs bewirkt hat, genügt somit der Zugriff auf das Objekt, in dem die logische Verknüpfung und die entsprechenden Signale der Zustände vorliegen und gekapselt sind, so dass ein "Umweg" über die Konsultation einer Dokumentation oder eine Betrachtung aller Stellen des (Source-Codes des) Automatisierungsprogramms, welche an einer Beeinflussung des Steuerungsausgangs beteiligt sind, entfallen kann. Der Aktuator besitzt in diesem Falle ein zu diesem gehörendes (durch sog. "Objektkompositionstechnik") Verriegelungsobjekt, in welchem alle beteiligten Signale deskriptiv gekapselt sind.

Vorteilhafte Ausgestaltungen des erfindungsgemäßen Verfahrens sind in den abhängigen Patentansprüchen angegeben. Vorteilhaft wird das Objekt bei jedem Zugriff auf dieses auch ausgeführt, so dass bei jedem Zugriff die logische Verknüpfung ausgeführt wird und somit eine Überwachung der "Verriegelungsbedingungen" immer zumindest dann ausgeführt wird, wenn dem Steuerungsausgang ein anderer Wert zugeordnet werden soll, dies speziell dann, wenn das Aktuatorobjekt entweder manuell ("Handbetrieb") oder automatisch ("Schrittkette") angesteuert wird. Dabei wird vorteilhaft in den Fällen, in denen der Wert des Objektes nach der Ausführung des Objektes nicht dem damit definierten bzw. erlaubten Zustand des Steuerungsausgangs entspricht, der Zustand des Steuerungsausgangs unverzüglich an den Wert des Objektes angepasst. Vorteilhaft wird in einer Hauptschleife eines Automatisierungsprogramms zumindest einmal je Durchlauf ein Zugriff auf das Objekt vorgesehen, so dass eine regelmäßige Überwachung der Verriegelungsbedingungen gewährleistet ist. Die notwendige interne Abfrage des Freigabesignals des Aktuators wird hierbei an das Verriegelungsobjekt weitergeleitet (Delegationstechnik) wobei das Verriegelungsobjekt, welches alle beteiligten Sensorsignale kennt, direkt die beteiligten Sensorsignale abfragt und das resultierende Signal bildet.

Vorteilhaft wird mittels des Automatisierungsprogramms auch eine Methode bereitgestellt, wobei mittels dieser Methode der zumindest eine Zustand auslesbar und/oder darstellbar ist. Diese Methode ist vorteilhaft derart ausgestaltet, dass eine Kenntlichmachung desjenigen Zustandes erfolgt, welcher zu einer Verriegelung des Objektes und damit des Steuerungsausgangs geführt hat. Die Erfindung ermöglicht es also dem Operator an einem SCADA-System oder "Panel", in dem Falle, in welchem eine Freigabe verhindert wird, alle Signale mit ihren jeweiligen Zuständen und Namen (hier DP01, LS01, DS01) direkt einzusehen.

Für einen einfachen Zugriff auf den zumindest einen Zustand wird dieser in der logischen Verknüpfung vorteilhaft als ein Enumerator eines zugehörigen Signals definiert, wodurch sich eine einfache, übersichtliche Programmierung ergibt. Eine andere Möglichkeit ist die direkte Bereitstellung als sogenannten "Delegaten", welcher direkt die Methode enthält, die das entsprechende Zustandssignal des Sensors liefert.

Ausführungsbeispiele des erfindungsgemäßen Verfahrens werden nachfolgend anhand der Zeichnung erläutert.

Dabei zeigt die einzige Figur in einer schematischen Darstellung eine Anordnung aus einem Vorratsbehälter, einem Reaktorgefäß und einer Automatisierungskomponente, also einer speicherprogrammierbaren Steuerung oder dergleichen.

In der Figur ist die bereits mit der Diskussion des Standes der Technik erläuterte Anordnung dargestellt, bei der als einfaches Beispiel für eine Automatisierungsaufgabe in der Prozesstechnik ein Vorratsbehälter S mit einem Reaktorgefäß D verbunden ist, wobei in der Verbindung als Aktuator ein Ventil AV01 angeordnet ist. Der Vorratsbehälter S ist mit einem Sensor DP01 ("Dry Protection") versehen, mit dessen Hilfe beispielsweise ein Trockenlauf einer Pumpe (nicht dargestellt)verhindert werden soll. Das Reaktorgefäß D ist mit dem Füllstandssensor LS01 ("Level Switch") und dem Türkontaktsschalter DS01 ("Door Switch") an der Wartungsöffnung H verbunden, wobei mit ersterem eine Überfüllung des Reaktorgefäßes D verhindert werden soll, und mit letzterem sichergestellt werden soll, dass ein Befüllung des Reaktorgefäßes D nur dann erfolgt, wenn die Wartungsöffnung H, die auch als "Mannloch" bezeichnet wird, verschlossen ist. Die Sensoren und der Aktuator, der durch das Ventil AV01 gebildet wird, sind mit den Eingängen IN1, IN2, IN3 und dem Ausgang OUT1 einer industriellen Steuerungseinrichtung SPS ("speicherprogrammierbare Steuerung") verbunden.

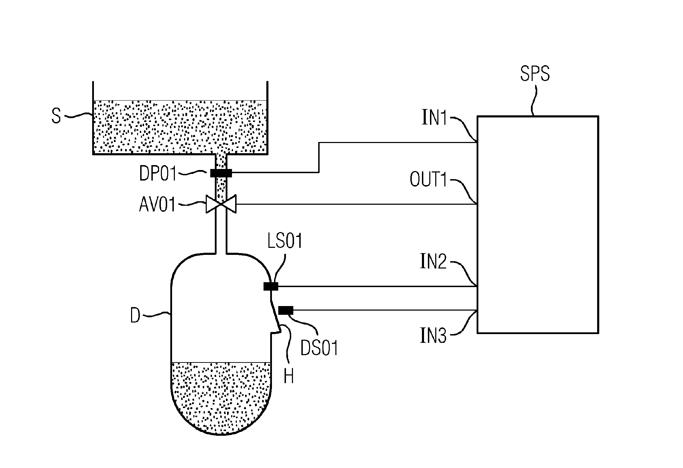

Die Ein- und Ausgänge IN1, IN2, IN3, OUT1, die in der Figur 1 dargestellt sind, werden in einem Automatisierungsprogramm als Signal-Objekte abgebildet, wobei die Eingangssignale der Sensoren DP01, LS01, DS01 durch die Zustands-Objekte DP01, LS01, DS01 wie folgt repräsentiert werden:
Trockenschutz: DP01
Vollmelder: LS01
Mannloch: DS01

Diese Zustands-Objekte können verschiedene Zustände annehmen, beispielsweise kann das dem Sensor DP01 zugeordnete Objekt DP01 die Zustände "Wet" oder "Dry" annehmen, das Zustands-Objekt LS01 des Sensors LS01 kann die Zustände "Covered" oder "Uncovered" annehmen, und schließlich kann das Zustands-Objekt DS01 des Sensors DS01 die Zustände "Open" oder "Closed" annehmen.

Der Aktuator, also das Einlassventil (Ventil) AV01, wird in einem Objekt abgebildet, welches die folgende Bezeichnung hat:
Einlassventil: AV01

In diesem Objekt AV01 sind die im Folgenden dargestellten logischen Verknüpfungen mit den Zuständen, die durch die Sensor-Objekte LS01, DS01, DP01 repräsentiert sind, durch die folgenden Anweisungen definiert:
AV01.Interlock.AddSignal(LS01.Uncovered);
AV01.Interlock.AddSignal(DS01.Closed);
AV01.Interlock.AddSignal(DP01.Wet);

Das Besondere ist hierbei, dass die Signale als Enumeratoren der Signal-Objekte bzw. der zugeordneten Zustands-Objekte verwendet werden, alternativ durch Delegaten. Dadurch ist es möglich, mittels einer entsprechenden Methode das entsprechende Signal der Sensor-Objekte bzw. der zugeordneten Zustands-Objekte zu gewinnen; alternativ enthalten die Delegaten direkt die Methode der Sensoren, beispielsweise über eine Anweisung:
LS01.GetSignal(Uncovered) .

Das "Interlock"-Objekt des Aktuators (Ventil AV) kann nun also selbst die Signale beschaffen, die für die Verriegelung ausgewertet werden müssen. Durch diese "deskriptive" Konfiguration erhält das Zustands-Objekt AV01 zur Laufzeit die beteiligten Signale und kann somit zur Laufzeit das resultierende Signal für eine Freigabe eines Stellgliedes (Ventil AV) selbst bilden. Durch die in dem Objekt AV01 enthaltenen Enumeratoren sind die Kontrollmodule sowie deren entsprechende Signale bekannt, womit sich eine Dokumentation, die beschreibt, welche Signale an einer Freigabe beteiligt sind, erübrigen kann. In einem Fall, in dem ein Aktuator (hier: Ventil AV) im Automatisierungsprogramm aktiviert ist, die Freigabe jedoch fehlt, kann also beispielsweise ein Operator an einem SCADA-System (SCADA = Supervisory Control and Data Aquisition) die an der Verriegelung beteiligten Signale direkt auflisten, also sowohl die Signal-Objekte als auch deren Zustand. Insbesondere in solchen Fällen, in denen eine Mehrzahl oder Vielzahl Signale an der Verriegelung beteiligt sind, ist es für diesen Bediener (Operator) bei einer herkömmlichen Umsetzung nicht möglich, direkt zu sehen, welches der Signale die Freigabe des Aktuators verhindert, sofern dies lediglich durch direkte Verknüpfungen im Automatisierungsprogramm geschieht. Mit dem beschriebenen Verfahren kann ein Bediener diese beteiligten Signale jedoch direkt auflisten.

## Patentansprüche

1. Verfahren für ein Automatisierungsprogramm einer industriellen Automatisierungsanordnung (S, D, SPS) zur Verriegelung eines Steuerungsausgangs (OUT1) eines Aktuators,
wobei zumindest ein Zustand (LS01, DS01, DP01) zur Freigabe des Steuerungsausgangs (OUT1) erfüllt sein muss,
**dadurch gekennzeichnet,**
**dass** der Steuerungsausgang (OUT1) durch ein Objekt (AV01) des Automatisierungsprogramms repräsentiert wird, wobei in diesem Objekt (AV01) der zumindest eine Zustand (LS01, DS01, DP01) mit dem den Steuerungsausgang repräsentierenden Zustand des Objektes (AV01) logisch derart verknüpft ist,
**dass** der Steuerungsausgang (OUT1) nur einen solchen Wert annehmen kann, der für den Zustand des Steuerungsausgangs (OUT1) gemäß dem zumindest einen Zustand (LS01, DS01, DP01) erlaubt ist.

2. Verfahren nach Patentanspruch 1,
**dadurch gekennzeichnet,**
**dass** das Objekt (AV01) bei jedem Zugriff auf das Objekt (AV01) bei der Abarbeitung des Automatisierungsprogramms ausgeführt wird, wobei bei jedem Zugriff auf das Objekt (AV01) die logische Verknüpfung ausgeführt oder ausgewertet wird.

3. Verfahren nach Patentanspruch 2,
**dadurch gekennzeichnet,**
**dass** in den Fällen, in denen der Wert des Objektes (AV01) nach Ausführung Objektes (AV01) nicht einem erlaubten Zustand des Aktuators oder des Steuerungsausgangs (OUT1) des Aktuators entspricht, der Zustand des Steuerungsausgangs (OUT1) an den Wert des Objektes (AV01) angepasst wird.

4. Verfahren nach einem der vorhergehenden Patentansprüche,
**dadurch gekennzeichnet,**
**dass** eine Methode bereitgestellt wird, wobei mittels dieser Methode der zumindest eine Zustand (LS01, DS01, DP01) auslesbar und/oder darstellbar ist.

5. Verfahren nach Patentanspruch 4,
**dadurch gekennzeichnet,**
**dass** die Methode zur Kenntlichmachung desjenigen des zumindest einen Zustands (LS01, DS01, DP01) eingerichtet ist, welcher in der logischen Verknüpfung die Verriegelung des Objekts (AV01) bewirkt.

6. Verfahren nach einem der vorhergehenden Patentansprüche,
**dadurch gekennzeichnet,**
**dass** der zumindest eine Zustand (LS01, DS01, DP01) in der logischen Verknüpfung als ein Enumerator eines zugehörigen Signals definiert wird, oder
**dass** eine als Delegat realisierte Methode ein Signal für den Steuerungsausgang (OUT1) liefert.
